# FASCICULE DE BREVET EUROPEEN

(11) **EP 0 345 141 B1**
(45) Date de publication et mention de la délivrance du brevet: **17.03.1993**
(21) Numéro de dépôt: 89401464.6
(22) Date de dépôt: 30.05.1989
(51) Int. Cl.: B64F 1/18

(54) **Ensemble de guidage optique aéronautique**
Optisches Flugleitsystem
Aeronautical guidance system

(30) Priorité: 31.05.1988 FR 8807248
(43) Date de publication de la demande: 06.12.1989
(73) Titulaire: SOCIETE FINANCIERE POUR L'ELECTRONIQUE, F- 75008 Paris (CH)
(72) Inventeur: Briatte, Louis-Michel, F-75116 Paris (FR)
(74) Mandataire: Hasenrader, Hubert

(56) Documents cités:
- FR-A- 1 564 107
- FR-A- 2 434 081
- US-A- 1 963 508

## Description

L'invention concerne le guidage optique des avions et aéronefs de toutes sortes pour leur permettre l'atterrissage de nuit.

On connaît déjà des dispositifs optiques à faisceaux colorés, permettant à un aéronef en phase d'approche de se situer par rapport au plan d'approche, c'est-à-dire de déterminer s'il est en bonne position, ou trop haut, ou trop bas, par rapport à ce plan d'approche, mais ces dispositifs ne renseignent que sur le positionnement en site, et ne fournissent pas de référence horizon, ni de repérage en azimut, ces derniers obligeant à recourir à d'autres techniques.

En outre, pour les applications militaires, ces dispositifs de guidage optique présentent l'inconvénient de faciliter le repérage par l'ennemi.

Le document FR-A-1 564 107 concerne un système de guidage en site et en azimut destiné au positionnement d'un aéronef lors du vol stationnaire qui comporte de plus un repérage d'horizon. Cependant par sa structure, ce système ne peut fonctionner qu'avec des sources lumineuses de couleurs différentes.

Le but de l'invention est d'éliminer les inconvénients précédents, en réalisant un ensemble de guidage optique aéronautique qui puisse fonctionner en lumière visible ou infrarouge, qui permette de fournir optiquement au pilote une référence d'horizon, et qui en outre assure également optiquement un guidage, au moins en azimut, sur la trajectoire d'approche correcte.

Pour cela, l'ensemble de guidage optique, selon l'invention, pour l'atterrissage des aéronefs sur une aire d'atterrissage comprenant des feux de repérage en site, des feux de repérage en azimut et des moyens de repérage d'horizon, lesdits feux de repérage en site et en azimut déterminant une trajectoire d'approche, se caractérise par le fait que les moyens de repérages d'horizon et sont constitués par deux barres lumineuses continues séparées, ces barres étant disposées de part et d'autre desdits feux de repérage en site et dans le prolongement l'une de l'autre selon une direction horizontale sensiblement perpendiculaire à la trajectoire d'approche et en ce que les feux de dépassement d'azimut sont situés à chaque extrémité, vers l'extérieur de l'ensemble de ces barres et orientés de façon à n'être vus qu'en cas de dépassement de l'axe d'atterrissage vers la gauche ou vers la droite, par quoi l'identification d'un des feux de repérage en site ou d'un des feux de dépassement d'azimut est effectué par référence spaciale auxdites barres lumineuses.

Les barres lumineuses de référence horizon peuvent émettre une lumière visible, non éblouissante, blanche ou colorée, ou une lumière infrarouge. Il en est de même pour les feux caractéristiques de dépassement d'azimut à droite et à gauche, ces derniers étant de préférence clignotants pour attirer davantage l'attention du pilote.

Enfin, les feux caractéristiques de dépassement de site vers le haut et vers le bas peuvent également émettre une lumière visible ou infrarouge, et se distinguer les uns des autres par leur couleur, s'ils sont en lumière visible, et/ou par leur nombre et leur position, en particulier s'ils sont en lumière infrarouge, et ils peuvent avantageusement être clignotants pour attirer l'attention, avec des cadences de clignotement égales ou différentes, et un clignotement en phase ou en alternance.

De cette manière, la simple observation optique, directe s'il s'agit de lumière visible, ou par l'intermédiaire d'un dispositif de vision nocturne s'il s'agit de lumière infrarouge, permet de renseigner le pilote sur la référence horizon, et sur sa situation en azimut et en site pour le guider exactement sur sa trajectoire d'approche jusqu'à l'aire d'atterrissage.

L'ensemble peut en outre être combiné avec un dispositif de télécommande depuis l'aéronef, ou de télétransmission vers l'aéronef.

D'autres particularités de l'invention apparaîtront dans la description qui va suivre d'un mode de réalisation pris comme exemple et représenté sur le dessin annexé, sur lequel :
la figure 1 est une vue de face en élévation de l'ensemble complet;
la figure 2 est une vue simplifiée de dessus;
la figure 3 représente à plus grande échelle les extrémités de la figure 2;
la figure 4 est une vue en bout à encore plus grande échelle selon IV de la figure 3;
la figure 5 est une vue de côté de l'appareil dans son fonctionnement en lumière visible;
la figure 6 est une vue correspondant à la figure 5 dans le fonctionnement en lumière infrarouge;
la figure 7 est une vue schématique en élévation de ce fonctionnement en infrarouge; et
la figure 8 une vue schématique de face des parties visibles par le pilote.

L'ensemble de guidage selon l'invention comporte essentiellement deux barres de référence horizon 1 et 2, situées dans le prolongement l'une de l'autre selon une ligne horizontale sensiblement perpendiculaire à la trajectoire d'approche. Chacune de ces barres comporte une zone principale lumineuse, et des zones d'extrémités occultées, respectivement 3 au centre et 4 aux extrémités de l'ensemble.

L'ensemble comprend, par ailleurs, deux feux caractéristiques de dépassement d'azimut, dont un 5 à gauche, à l'extrémité de la barre 1, et l'autre 6 à droite, à l'extrémité de la barre 2.

Ces barres 1 et 2, et ces feux 5 et 6, peuvent émettre en lumière visible, blanche ou colorée, ou en lumière infrarouge. En outre, les feux d'extrémités 5 et 6 sont de préférence clignotants.

De la sorte, dans l'obscurité, le pilote aperçoit, directement ou par l'intermédiaire d'un viseur infrarouge, les deux barres lumineuses 1 et 2 nettement séparées, grâce aux parties occultées 3 ainsi qu'au coffre central 7 de l'appareil, et les feux d'extrémités 5 et 6 apparaissent également distinctes grâce aux parties occultées 4 et au clignotement de ces feux.

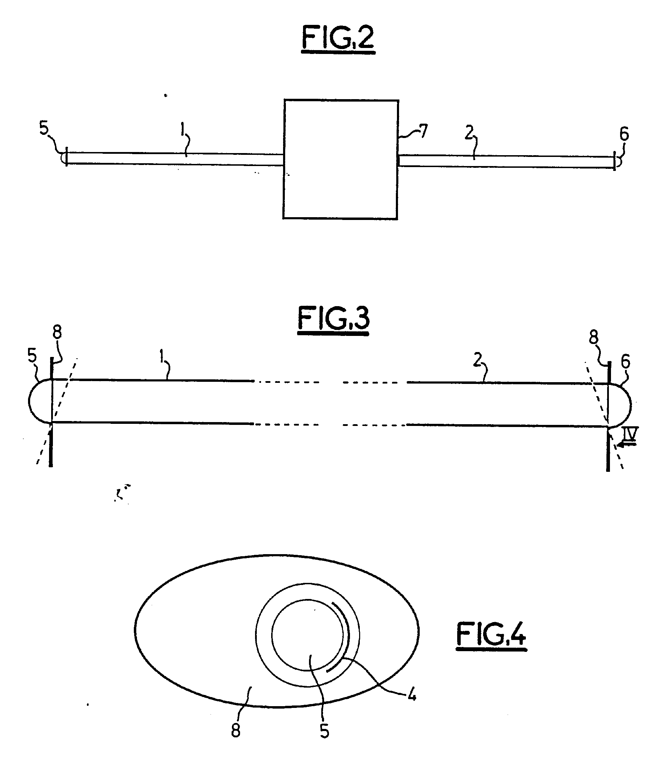

Cependant, comme illustré en particulier sur les figures 3 et 4, des masques réglables 8 sont réglés de telle manière que ni l'un ni l'autre des feux d'extrémités 5 et 6 ne soit visible lorsque le pilote se trouve sur l'azimut de la trajectoire d'approche, alors qu'au contraire, dès qu'il dépasse cette trajectoire sur la droite, il aperçoit le feu caractéristique de dépassement d'azimut à droite 6 sous la forme d'un clignotement, et inversement s'il dépasse sa trajectoire sur la gauche, il aperçoit le feu caractéristique de dépassement à gauche 5 sous sa forme clignotante à gauche de l'ensemble des deux barres 1 et 2. Les deux feux 5 et 6 ne sont donc jamais vus en même temps.

Le pilote qui amorce son virage pour prendre la phase d'approche dispose donc tout à la fois d'une référence horizon précise, le dispensant d'avoir recours à son horizon artificiel de bord, et en même temps un guidage précis en azimut par chaque apparition d'un clignotement à droite ou à gauche des barres de référence horizon.

L'ensemble peut naturellement être complété par un ensemble de guidage optique en site à faisceaux colorés de type connu, tout au moins si l'on opère en lumière visible.

D'une manière plus générale, l'ensemble selon l'invention peut avantageusement se compléter par des feux caractéristiques de dépassement de site en haut et en base, constitués par des faisceaux directifs en lumière visible ou infrarouge.

Dans l'appareil pris comme exemple, les deux possibilités, lumière visible ou infrarouge, sont groupées sur le même ensemble pour être utilisées l'une ou l'autre à volonté, mais naturellement jamais les deux en même temps.

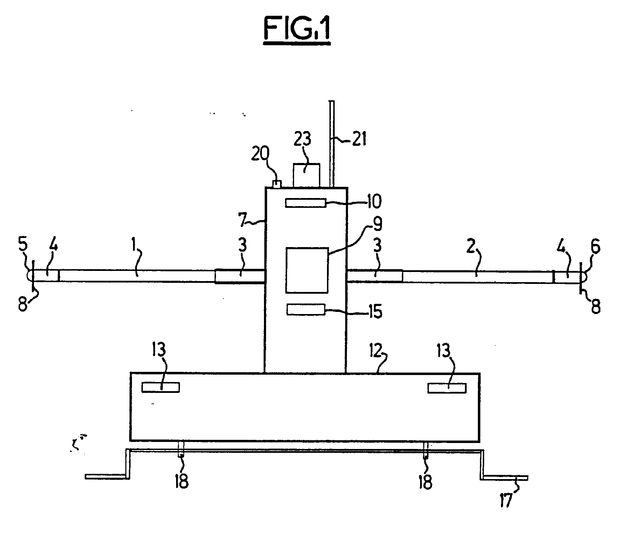

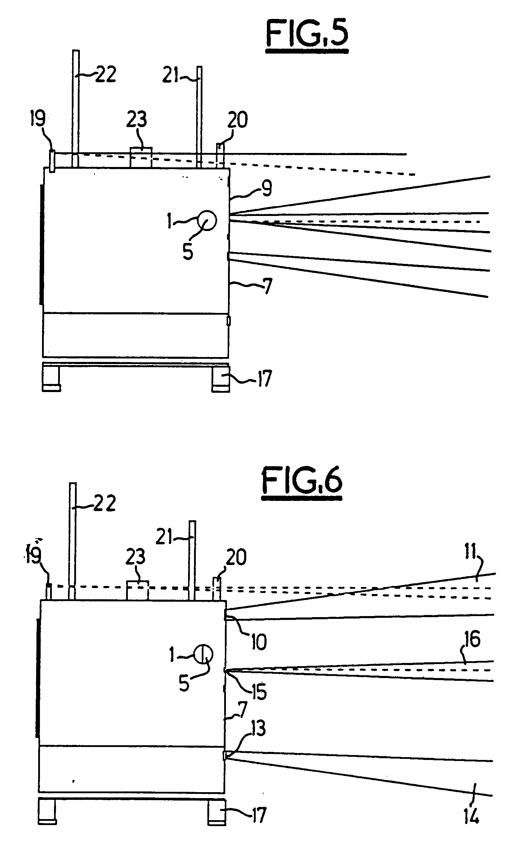

On voit sur la figure 1 la fenêtre 9, située entre les deux barres de référence horizon 1 et 2 et à travers laquelle sont émis les faisceaux colorés visibles sur la figure 5 et permettant d'une manière connue de repérer la situation de l'aéronef en site par rapport au plan d'approche. Le signal coloré correspondant, clignotant ou non, apparaît donc dans la nuit à peu près au centre des deux barres 1 et 2, ce qui permet de localiser et d'identifier au sol la source optique correspondant au guidage en site.

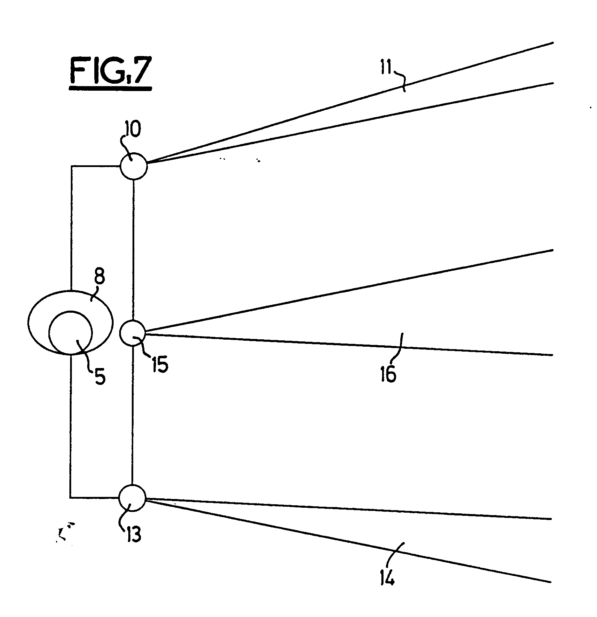

Par contre, dans le cas de guidage infrarouge, les faisceaux ne peuvent plus être distingués par leur couleur, et on les distingue alors par leur position relativement aux barres 1 et 2. Par exemple, une fenêtre 10, située nettement au-dessus du niveau des barres 1 et 2, permet l'envoi d'un faisceau infrarouge 11, représenté sur les figures 6 et 7, ce faisceau, de préférence clignotant, signalant le dépassement du site idéal en hauteur.

D'autre part, dans le coffre de base 12, sur lequel est fixé le coffre central 7, sont prévues, par exemple, deux fenêtres 13 par lesquelles sont émis deux faisceaux infrarouges 14 qui sont visibles nettement en-dessous du niveau des barres 1 et 2 lorsque l'aéronef est en-dessous du plan d'approche. Ces faisceaux 14 sont également clignotants, et de préférence alternés à droite et à gauche pour les deux fenêtres 13.

Enfin, on peut avantageusement prévoir une dernière fenêtre 15, sensiblement au niveau des barres 1 et 2 et éventuellement confondue avec la fenêtre 9, pour l'émission d'un faisceau infrarouge 16 non clignotant, indiquant une approche correcte en site.

Naturellement, cette distinction des feux et de leur fonction par leur position, leur nombre et leur clignotement, pourrait tout aussi bien être utilisée en lumière visible, à la place ou en plus de leur coloration.

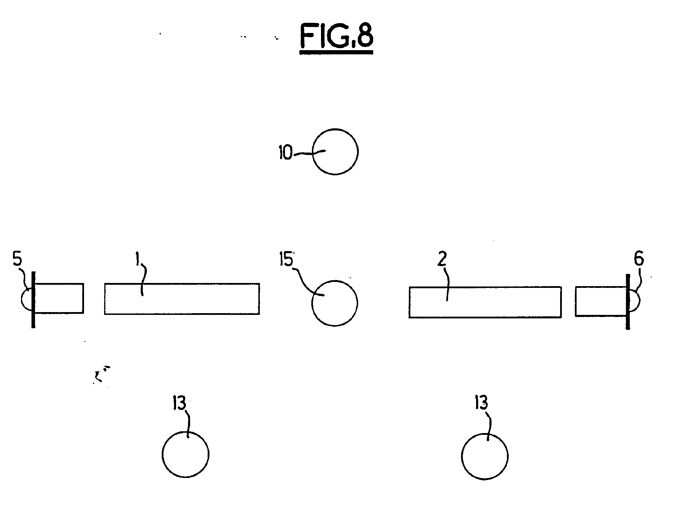

La figure 8 résume l'aspect nocturne des diverses parties visibles, étant bien entendu que, comme exposé plus haut, elles ne sont pas toutes visibles en même temps.

Naturellement, tout l'ensemble des faisceaux visibles et infrarouges est réglé avec précision, et cet ensemble est fixé au sol par une plaque de fixation 17 avec des vérins 18 de réglage en site, une alidade 19-20 étant en outre prévue, par exemple sur le dessus du coffre central 7, pour permettre ce réglage en site, ainsi également que le réglage en azimut par rotation de l'ensemble sur le sol. L'ensemble de fixation peut également être gyrostabilisé pour les applications marines.

A titre de perfectionnement, le fonctionnement de l'ensemble peut être mis en service automatiquement par télécommande depuis l'aéronef grâce à une émission codée en prévoyant pour cela une antenne de réception 21 sur le coffre 7.

Inversement, un émetteur mis en marche par cette télécommande et une autre antenne d'émission 22 peuvent être prévus, comme représenté sur les figures 6 et 7, pour transmettre des renseignements à l'aéronef.

On peut également prévoir sur le dessus de l'appareil un flash 23 clignotant en permanence ou mis en marche par télécommande à grande distance, et permettant une première phase d'approche lointaine, afin de commander la mise en service de l'ensemble des faisceaux et feux, notamment infrarouges, seulement dans la deuxième phase d'approche, de manière à limiter la consommation, et le repérage pour les applications militaires, ce flash 23 pouvant lui aussi fonctionner en lumière visible ou en infrarouge.

## Revendications

1. Ensemble de guidage optique pour l'atterrissage des aéronefs sur une aire d'atterrissage comprenant des feux de repérage en site (10, 13), des feux de repérage en azimut (5, 6) et des moyens de repérage d'horizon (1, 2), lesdits feux de repérage en site et en azimut déterminant une trajectoire d'approche, caractérisé par le fait que les moyens de repérages d'horizon (1) et (2) sont constitués par deux barres lumineuses continues séparées, ces barres étant disposées de part et d'autre desdits feux de repérage en site et dans le prolongement l'une de l'autre selon une direction horizontale sensiblement perpendiculaire à la trajectoire d'approche et en ce que les feux de dépassement d'azimut (5, 6) sont situés à chaque extrémité, vers l'extérieur de l'ensemble de ces barres et orientés de façon à n'être vus qu'en cas de dépassement de l'axe d'atterrissage vers la gauche ou vers la droite, par quoi l'identification d'un des feux de repérage en site ou d'un des feux de dépassement d'azimut est effectué par référence spaciale auxdites barres lumineuses.

2. Ensemble de guidage selon la revendication 1, caractérisé par le fait que les barres lumineuses de référence horizon (1, 2) ainsi que les feux de dépassement d'azimut (5, 6) émettent en lumière visible, blanche ou colorée selon un ou plusieurs secteurs verticaux distincts.

3. Ensemble de guidage selon la revendication 1, caractérisé par le fait que les barres lumineuses de référence (1, 2) ainsi que les feux de dépassement d'azimut (5, 6) émettent en lumière infrarouge.

4. Ensemble de guidage selon une des revendications précédentes, caractérisé par le fait que les feux caractéristiques de dépassement d'azimut (5, 6) comportent un ou plusieurs secteurs clignotants.

5. Ensemble de guidage selon la revendication 1, caractérisé par le fait que le dispositif de guidage en site infrarouge, comporte des feux de dépassement de site vers le haut (10) et vers le bas (13), constitué par des faisceaux directifs réglés pour n'être visibles respectivement qu'en cas de dépassement du site d'approche vers le haut et vers le bas par l'aéronef, ces divers feux se distinguant entre eux par leur position par rapport aux barres de référence (1, 2) fonctionnant en infrarouge, et leur nombre, et/ou par leur clignotement.

6. Ensemble de guidage selon une des revendications 1, 2 et 4, caractérisé par le fait que le feu de dépassement de site vers le haut en lumière visible est clignotant.

7. Ensemble de guidage selon une des revendications 1, 2 et 4, caractérisé par le fait que le feu de dépassement de site vers le haut en lumière visible est de coleur verte.

8. Ensemble de guidage selon une des revendications précédentes, caractérisé par le fait qu'il comporte un flash pour le repérage lointain précédant la mise en service des feux de guidage.

9. Ensemble de guidage selon une des revendications précédentes, caractérisé par le fait qu'il comporte un émetteur et une antenne d'émission permettant d'envoyer des renseignements codés à l'aéronef.

## Patentansprüche

1. Optisches Flugleitsystem für die Landung von Luftfahrzeugen auf einem Flugplatz, bestehend aus Lichtern betreffend Elevationswinkel (10,13) und Azimutwinkel (5,6) und aus Vorrichtungen zum Orten des Horizonts (1,2), wobei die genannten Lichter betreffend Elevations- und Azimutwinkel eine Anflugbahn definieren, dadurch gekennzeichnet, daß die Vorrichtungen zur Horizontortung (1) und (2) aus zwei voneinander getrennten, durchgehenden Leuchtstäben bestehen, die diesseits und jenseits der besagten Elevationswinkellichter und einer in Verlängerung des anderen entlang einer horizontalen Richtung angeordnet sind, die mehr oder weniger quer zur Anflugbahn liegt, sowie dadurch, daß die Lichter, die ein Überschreiten des Azimutwinkels (5,6) anzeigen, an jedem Ende dieser Stäbe nach außen hin angeordnet und so ausgerichtet sind, daß sie nur gesehen werden, wenn die Landeachse nach links oder rechts überschritten wird, wodurch das Erkennen eines der Elevationswinkellichter oder eines der Lichter, die ein Überschreiten des Azimutwinkels anzeigen, durch den räumlichen Bezug zu den besagten Leuchtstäben erreicht wird.

2. Flugleitsystem nach Anspruch 1, dadurch gekennzeichnet, daß die Horizontbezugsleuchtstäbe (1,2) sowie die Lichter, die ein Überschreiten des Azimutwinkels anzeigen (5,6), sichtbares weißes oder farbiges Licht entlang eines oder mehrerer verschiedener, vertikaler Sektoren ausstrahlen können.

3. Flugleitsystem nach Anspruch 1, dadurch gekennzeichnet, daß die Bezugsleuchtstäbe (1,2) sowie die Lichter, die ein Überschreiten des Azimutwinkels anzeigen (5,6), Infrarotlicht ausstrahlen.

4. Flugleitsystem nach einem der vorstehenden Ansprüche, dadurch gekennzeichnet, daß die jeweiligen Lichter, die das Überschreiten des Azimutwinkels anzeigen (5,6), einen oder mehrere Blinkbereiche aufweisen.

5. Flugleitsystem nach Anspruch 1, dadurch gekennzeichnet, daß das Infrarot-Elevationswinkelleitsystem Lichter aufweist, die ein Überschreiten des Elevationswinkels nach oben (10) und nach unten (13) anzeigen, was durch Leitstrahlen geschieht, die so eingestellt sind, daß sie jeweils nur im Falle einer Überschreitung des Anflug-Elevationswinkels durch das Luftfahrzeug nach oben oder unten sichtbar sind, wobei diese verschiedenen Lichter voneinander durch ihre Position gegenüber den mit Infrarotlicht arbeitenden Bezugsleuchtstäben (1,2) und durch ihre Anzahl und/oder ihr Blinken zu unterscheiden sind.

6. Flugleitsystem nach einem der Ansprüche 1, 2 und 4, dadurch gekennzeichnet, daß das Licht, das eine Überschreitung des Elevationswinkels nach oben in sichtbarem Licht anzeigt, ein Blinklicht ist.

7. Flugleitsystem nach einem der Ansprüche 1, 2 und 4, dadurch gekennzeichnet, daß das Licht, das eine Überschreitung des Elevationswinkels nach oben in sichtbarem Licht anzeigt, grün ist.

8. Flugleitsystem nach einem der vorstehenden Ansprüche, dadurch gekennzeichnet, daß es eine Blitzlichtlampe zur Orientierung aus der Ferne aufweist, die der Inbetriebnahme der Leitlichter vorausgeht.

9. Flugleitsystem nach einem der vorstehenden Ansprüche, dadurch gekennzeichnet, daß es einen Sender und eine Sendeantenne aufweist, mit deren Hilfe kodierte Informationen zum Luftfahrzeug übertragen werden können.

## Claims

1. Optical guidance system for the landing of an aircraft on a landing area comprising elevation reference lights (10, 13), azimuth reference lights (5, 6) and horizon reference means (1, 2), said elevation and azimuth reference lights determining an approach path, characterized by the fact that the horizon reference means (1) and (2) have two continuous and separate light bars, said bars being disposed on either side of said elevation reference lights and in alignment with each other in a horizontal direction substantially perpendicular to the approach path and in that the azimuth overshoot indicating lights (5, 6) are located at each outer end of the set of bars and oriented in such a way that said lights can only be seen when the aircraft overshoots the landing area to the left or to the right, whereby one of the elevation reference lights or one of the azimuth overshoot indicating lights is identified by space reference with respect to said light bars.

2. Guidance system according to claim 1, characterized by the fact that the horizon reference light bars (1, 2) as well as the azimuth overshoot indicating lights (5, 6) transmit a visible, white or colored light according to one or more distinct vertical sections.

3. Guidance system according to claim 1, characterized by the fact that the reference light bars (1, 2) as well as the azimuth overshoot indicating lights (5, 6) transmit in infrared light.

4. Guidance system according to one of the preceding claims, characterized by the fact that the azimuth overshoot indicating lights (5, 6) comprise one or more flashing sections.

5. Guidance system according to claim 1, characterized by the fact that the guidance device in elevation using infrared light comprises upward (10) and downward (13) elevation overshoot indicating lights, constituted by directional beams adjusted so that said beams can only be seen respectively in the case of an upward overshoot or a downward overshoot of the approach path in the elevation of the aircraft, said various lights being distinguished from each other by their position in relation with the reference bars (1, 2) operating in infrared light, and their quantity, and/or their flashing.

6. Guidance system according to one of claims 1, 2 and 4, characterized by the fact that the upward elevation overshoot indicating light is flashing in visible light.

7. Guidance system according to one of claims 1, 2 and 4, characterized by the fact that the upward elevation overshoot indicating light is green in visible light.

8. Guidance system according to one of the preceding claims, characterized by the fact that it is provided with a flash for the distant spotting preceding the starting up of the guidance lights.

9. Guidance system according to one of the preceding claims, characterized by the fact that it comprises a transmitter and a transmitting antenna enabling encoded information to be transmitted to the aircraft.
